Europäisches Patentamt

European Patent Office

Office européen des brevets

(11) Veröffentlichungsnummer: **0 324 340**
A2

## (12) EUROPÄISCHE PATENTANMELDUNG

(21) Anmeldenummer: 89100012.7

(22) Anmeldetag: 02.01.89

(51) Int. Cl.⁴: **B01D 19/04** , C13G 1/00

(30) Priorität: 11.01.88 DE 3800492

(43) Veröffentlichungstag der Anmeldung:
19.07.89 Patentblatt 89/29

(84) Benannte Vertragsstaaten:
AT BE CH DE ES FR GB GR IT LI NL SE

(71) Anmelder: Henkel Kommanditgesellschaft auf
Aktien
Postfach 1100 Henkelstrasse 67
D-4000 Düsseldorf-Holthausen(DE)

(72) Erfinder: Schmid, Karl Heinz, Dr.
Stifterstrasse 10
D-4020 Mettmann(DE)
Erfinder: Meffert, Alfred, Dr.
Marie-Curie-Strasse 10
D-4019 Monheim(DE)
Erfinder: Schenker, Gilbert, Dr.
Herrmann-Hesse-Strasse 5
D-4006 Erkrath 2(DE)
Erfinder: Asbeck, Adolf
Am Langen Weiher 51
D-4000 Düsseldorf 13(DE)

(54) **Schaumbekämpfungsmittel für die Herstellung und Verarbeitung von Nahrungsmitteln bzw. für Fermentationsprozesse.**

(57) Endgruppen-verschlossene Alkohol-Oligoglycol-Ethern der allgemeinen Formel (I)

$$R\text{-}(OCH_2CH_2)_n\text{-}OR_1 \quad (1),$$

in der

R     einen gesättigten oder ungesättigten linearen oder verzweigten Alkylrest mit 6 bis 28 C-Atomen,

$R_1$     einen linearen Alkylrest mit 1 bis 8 C-Atomen und

n     eine Zahl von 2 bis 10

bedeuten, werden als schaumdämpfende Zusatzstoffe bei der Herstellung und/oder Verarbeitung von Nahrungsmitteln sowie in Fermentationsprozessen eingesetzt.

EP 0 324 340 A2

# Schaumbekämpfungsmittel für die Herstellung und Verarbeitung von Nahrungsmitteln bzw. für Fermentationsprozesse

Die Erfindung betrifft die industrielle Verarbeitung und/oder Herstellung von Nahrungsmitteln sowie eine erleichterte Handhabung von Fermentationsprozessen, die auch außerhalb des engeren Bereichs der Nahrungsmittelbe- bzw. -verarbeitung Bedeutung haben. Beispiele hierfür sind Fermentationsprozesse der Arzneimittelindustrie, beispielsweise bei der Gewinnung von Antibiotika.

Die Erfindung beschäftigt sich insbesondere mit einem Problem der hier angesprochenen Arbeitsbereiche, das in der industriellen Fertigung eine schwerwiegende Behinderung darstellen kann. Es handelt sich dabei um die unerwünschte Schaumbildung, die durch die Mittel der vorliegenden Erfindung auf ein das technische Produktionsverfahren nicht beeinträchtigendes Maß herabgesetzt oder ganz verhindert werden kann.

Der Schaumbekämpfung kommt in der Zucker- und Hefeindustrie, in der Kartoffel-verarbeitenden Industrie sowie in technischen Fermentationsprozessen, wie sie z.B. als biotechnologische Verfahren zur Gewinnung von beispielsweise Antibiotika großtechnisch durchgeführt werden, beträchtliche Bedeutung zu. Bei der industriellen Verarbeitung etwa zuckerhaltiger Pflanzensäfte, wie sie in großem Maßstab bei der Gewinnung aus Zucker rüben und aus Zuckerrohr erfolgt, ebenso aber auch bei der Erzeugung von Backhefe unter Verwendung von Melasse oder bei der Herstellung von Kartoffelfertigprodukten wie Chips, Pommes frites und dergleichen, muß durch Zusatz von geeigneten Hilfsmitteln die Schaumbildung auf ein das technische Produktionsverfahren nicht beeinträchtigendes Maß herabgesetzt werden.

Verantwortlich für die Bildung der störenden und üblicherweise beständigen Schäume sind gewisse grenzflächenaktive Stoffe, z.B. Huminsäuren, Eiweißsubstanzen, Abbauprodukte von Eiweiß und Stärke, Pektine und Saponine wie sie in der Natur zahlreich vorkommen. Die Menge der Schaumbildner ist dabei je nach Erntejahr und Anbaugebiet verschieden.

Durch die Bildung unerwünschter Schäume kann die Produktion von Zucker- und Hefefabriken oder die Arbeit der Fermentationsanlagen stark behindert werden, etwa weil die Kapazität der Anlage nicht ausgenutzt werden kann, oder es können durch die Schaumbildung erhebliche Verluste an beispielsweise Zuckerrohrsaft, an Hefe oder Fermentationsbrühe eintreten.

Besondere Schwierigkeiten durch übermäßige Schaumentwicklung können in einer Zuckerfabrik in den Diffuseuren, in den Klärvorrichtungen sowie in den Carbonisiertanks und in den Verdampfern auftreten. In den Gärbottichen einer Hefefabrik oder einer Fermentationsanlage soll sich zwar - wegen der besseren Durchlüftung - eine gewisse Menge Schaum bilden, er darf aber ein bestimmtes Maß nicht überschreiten.

Die zur Schaumregulierung einzusetzenden Hilfsmittel müssen bei der üblichen Aufarbeitung des Endproduktes, etwa bei der Raffination des Zuckers oder bei der Wäsche der Hefe, weitgehend entfernt werden, so daß sie das fertige Erzeugnis nicht mehr belasten. Gleiches gilt für die Erzeugung von Kartoffelfertigprodukten. Darüberhinaus müssen alle Hilfsmittel, die bei der Herstellung von Nahrungsmitteln verwendet werden, geruch- und geschmacklos und selbstverständlich physiologisch völlig unbedenklich sein.

Schaumbekämpfungsmittel, die zum Waschen, z. B. von Zuckerrüben oder Kartoffeln, verwendet werden und dann ins Abwasser gelangen, sollen biologisch vollständig abgebaut werden können. Aus wirtschaftlichen Gründen und um die durch den Entschäumerzusatz bedingte Verunreinigung des beispielsweise Zucker enthaltenden Substrats möglichst gering zu halten, sind besonders hochwirksame Entschäumer erwünscht. Bei der Hefeherstellung darf der Entschäumer überdies das Wachstum der Hefezellen, und damit die Hefeausbeute, nicht beeinträchtigen.

Wichtig für den praktischen Einsatz der Entschäumer ist aber auch ihre lang anhaltende Wirkung. Manche anfänglich stark wirksamen Entschäumer werden nach kurzer Zeit völlig wirkungslos. Dementsprechend müssen in einem solchen Fall ständig weitere Entschäumermengen zugesetzt werden, so daß derartige Hilfsmittel unwirtschaftlich im Verbrauch sind.

Für die Entschäumung in der Zucker- und Hefeindustrie sind seit langem Fette und Öle wie Rüb-, Erdnuß-, Olivenöl sowie Wollfett im Gebrauch. Auch Fettsäuremonoglyceride, Fettsäurepolyglycolester, Polyalkylenglycole, Ester von Tallölsäuren, Ethylenoxidaddukte an Alkylphosphorsäuren und an verzweigte Fettalkohole, Alkylenoxidaddukte an Oligosaccharide sowie freie Fettalkohole sind für diesen Zweck vorgeschlagen worden. Obwohl mit diesen Stoffen auch eine gewisse Schaumunterdrückung erreicht werden kann, können sie bis heute aus verschiedenen Gründen nicht restlos befriedigen. Grund ist vor allem die für die wirkungs volle Entschäumung benötigte große Menge dieser Hilfsmittel. Der hohe Verbrauch ist sowohl auf eine ungenügende spontane Entschäumungswirkung als auch auf eine nicht genügend lang anhaltende Wirkung zurückzuführen. Heute eingesetzte wirksamere Substanzen als die zuvor genannten haben den entscheidenden Nachteil, daß sie biologisch nicht hinreichend vollständig abgebaut werden. Ein solcher biologisch vollständiger, rascher Abbau in der Kläranlage ohne Bildung von Metaboliten ist heute eine der wichtigsten Anforderungen an Hilfsmittel der hier betroffenen Art.

Die Erfindung geht von der Aufgabe aus, Schaumbekämpfungsmittel für die Herstellung bzw. Verarbeitung von Nahrungsmitteln bzw. für Fermentationsprozesse der geschilderten Art anzugeben, die bei völliger physiologischer Unbedenklichkeit bereits in geringsten Zusatzmengen eine ausgezeichnete spontane Entschäumung bewirken und diese Wirksamkeit über lange Zeiträume beibehalten. Gleichzeitig soll der rasche, biologisch vollständige Abbau ohne Bildung von Metaboliten in der Kläranlage sichergestellt sein.

Zur technischen Lösung dieser Aufgabe schlägt die Erfindung die Verwendung von Endgruppenverschlossenen Alkohol-Oligoglycol-Ethern der allgemeinen Formel (I)

$$R-(OCH_2CH_2)_n-OR_1 \quad (I)$$

als schaumdämpfende Zusatzstoffe für das angegebene Gebiet der insbesondere industriellen Herstellung und/oder Verarbeitung von Nahrungsmitteln sowie in Fermentationsprozessen vor, wobei in der angegebenen allgemeinen Formel (I) R einen gesättigten oder ungesättigten linearen oder verzweigten Alkylrest mit 6 bis 28 C-Atomen, $R_1$ einen linearen Alkylrest mit 1 bis 8 C-Atomen und n eine Zahl von 2 bis 10 bedeuten.

Die erfindungsgemäß als Schaumbekämpfungsmittel verwendeten Verbindungen der allgemeinen Formel (I) sind wengistens anteilsweise bekannte Stoffe, die auch bereits zum Zwecke der Schaumdämpfung eingesetzt worden sind, vergleiche hierzu beispielsweise EP-A-124 815. Nicht bekannt ist jedoch, daß Verbindungen dieser Art die vielgestaltigen und in ihrer Kombination ganz besonderen Anforderungen für schaumdämpfende Zusatzstoffe erfüllen, die im hier betroffenen Gebiet der Herstellung bzw. Verarbeitung von Nahrungsmitteln bzw. in Fermentationsprozessen Voraussetzung sind, und in geraffter Form zuvor geschildert worden sind. Schaumarme Reinigungsmittel, die bisher beispielsweise für den Einsatz der hier betroffenen Stoffe bzw. Stoffklasse vorgeschlagen worden sind, zeigen bei weitem nicht ein derart komplexes Anforderungsprofil, wie das Gebiet der menschlichen Nahrungs- und Arzneimittel, bei dem letztlich bestimmungsgemäß das industrielle Fertigprodukt dem lebenden Organismus und seinem Stoffwechselvorgang zugeführt wird.

Die Herstellung der Verbindungen der allgemeinen Formel (I) erfolgt in an sich bekannter Weise beispielsweise durch Umsetzen der Alkoholpolyglycolether mit Alkylhalogeniden in Gegenwart von Alkali. Aus verfahrenstechnischen Gründen kann es aber auch von Vorteil sein, die Ethylenoxidaddukte kurzkettiger Alkanole wie Methanol, Ethanol, Propanol oder Butanol mit Fettalkylchloriden in Gegenwart von Alkali umzusetzen.

Besonders bevorzugt ist erfindungsgemäß der Einsatz von Verbindungen der allgemeinen Formel (I), in denen der Rest R einen Alkylrest der angegebenen Art mit 8 bis 20 C-Atomen bedeutet. Bevorzugte Reste $R_1$ sind lineare Alkylreste mit 1 bis 4 C-Atomen, während in der bevorzugten Ausführungsform für die Verbindungen der allgemeinen Formel (I) n eine Zahl von 2 bis 10 ist.

Die Verbindungen der allgemeinen Formel (I) lassen sich insbesondere in zwei Untergruppen aufteilen bzw. definieren, denen im Rahmen des erfindungsgemäßen Handelns besondere Bedeutung zukommt.

In der ersten Untergruppe liegt die Kohlenstoffzahl des Restes R bei höheren Werten des angegebenen Bereichs. Sie beträgt vorzugsweise wenigstens 16 C-Atome und liegt insbesondere im Bereich von $C_{18}$-$C_{24}$. In diesem Fall ist der bevorzugte Zahlenwert für n aus der allgemeinen Formel (I) eine Zahl im Bereich von 6 bis 12 und insbesondere im Bereich von 8 bis 10. Verbindungen dieser Art sind dann im Sinne des erfindungsgemäßen Handelns ganz besonders bevorzugt, wenn zusätzlich der Rest $R_1$ den n-Butylrest darstellt.

In der zweiten Untergruppe der Verbindungen der allgemeinen Formel (I), der erfindungsgemäß besondere Bedeutung zukommt, hat der Rest R 6 bis 14 C-Atome und bevorzugt 8 bis 13 C-Atome. In diesem Fall bedeutet n in der allgemeinen Formel (I) eine Zahl von 2 bis 6 und bevorzugt eine Zahl von 2 bis 4. Verbindungen der hier betroffenen Art sind dann im Sinne des erfindungsgemäßen Handelns besonders geeignet und wichtig, wenn gleichzeitig der Rest $R_1$ der Methylrest ist.

Geeignete höhere Alkohole der zuvor genannten ersten Untergruppe für eine Ethoxylierung und anschließende Veretherung und Endgruppenverschluß sind beispielsweise die bekannten Guerbet-Alkohole, die durch Dimerisierung von Fettalkoholen bzw. Fettalkoholschnitten erhalten werden können. Die vergleichsweise niedrigeren Alkohole der zweiten Unterklasse können natürlichen und/oder synthetischen Ursprungs sein, grundsätzlich gilt für beide Klassen, daß sowohl individuelle Alkohole als auch Alkoholschnitte der jeweils angegebenen C-Zahl-Bereiche ethoxyliert und Endgruppen-verschlossen sein können. Insbesondere im Bereich der Alkoholethoxylate mit niedrigerer Kohlenstoffzahl kann auch Alkoholen mit ungerader Kohlenstoffzahl besondere Bedeutung zukommen, wie sie durch übliche Synthesen erhalten werden können. Hingewiesen wird beispielsweise auf die bekannten Oxoalkohole.

Besonders geeignete Entschäumer mit guter Sofort- und Langzeitwirkung sind beispielsweise die folgenden Komponenten.

2-Octyl-dodecanol-$(EO)_8$-n-butyl

2-Octyl-dodecanol-$(EO)_{10}$-n-butyl

2-Hexyldecanol-$(EO)_6$-n-butyl

2-Hexyldecanol-$(EO)_8$-n-butyl

Kokosalkohole-$(EO)_{10}$-n-butyl

($C_{12}$ bis $C_{18}$)

Kokosalkohole-$(EO)_{12}$-n-butyl

Octanol-$(EO)_2$-methyl

Decanol-$(EO)_2$-methyl

Kokosalkohol-$(EO)_4$-methyl

($C_{12}$ bis $C_{18}$)

Ethylhexanol-$(EO)_2$-methyl

Isononanol-$(EO)_2$-methyl

Isotridecanol-$(EO)_4$-methyl

Die erfindungsgemäß als Entschäumerhilfsmittel einzusetzenden Komponenten wirken bereits in geringsten Mengen, sie werden im allgemeinen in Mengen deutlich unterhalb 1 %, bezogen auf das zu entschäumende Gut, eingesetzt, wobei bereits der Zusatz von Spuren, etwa im Bereich von 50 bis 500 ppm, insbesondere im Bereich von etwa 200 ppm befriedigende und lang anhaltende Entschäumungswirkungen auslöst.


Beispiele

Die Wirkung von Entschäumern auf Lösungen, wie sie in der Zucker- und Hefeindustrie vorkommen, kann im Labor in nachfolgend beschriebener Weise geprüft werden.

In einem 2-Liter-Meßzylinder werden 500 ml Flüssigkeit, die aus 110 ml Zuckersirup (Marke: Rübenkraut) und 420 ml Wasser der Wasserhärte 17 °dH (DIN-Norm) bestehen, eingefüllt. Wird die Prüfung der entschäumenden Wirkung von Schaumbekämpfungsmitteln für die kartoffelverarbeitende bzw. Fermentationsindustrie vorgenommen, so wird der Anteil an Zuckersirup durch die entsprechende Menge rohen Kartoffelsaftes bzw. Fermentationsbrühe ersetzt.

Mit Hilfe einer Laborschlauchpumpe mit einer Förderleistung von 3 Litern/Minute wird die Lösung mit einem Glasrohr vom Boden des Meßzylinders angesaugt. Die Rückführung der Flüssigkeit erfolgt über ein zweites Rohr, dessen unteres Ende in der Höhe der Oberkante des Meßzlyinders liegt. Die Flüssigkeit wird mit einer Geschwindigkeit von 3 Litern/Minute umgepumpt und fällt im freien Fall aus ca. 30 cm Höhe in den Meßzylinder zurück. Der Meßzylinder befindet sich zur Aufrechterhaltung einer konstanten Temperatur in einem Wasserbad, das auf 25 °C eingestellt ist.

Nach kurzer Laufzeit der Pumpe stellt sich in dem Meßzylinder eine annähernd konstante Schaumhöhe (von z.B. 2000 ml) ein. Als Meßwert für die Schaumhöhe wird das Gesamtvolumen aus Flüssigkeit (500 ml) und Schaumvolumen (hier also 1500 ml) abgelesen. Nach Einstellung dieses Blindwertes von z. B. 2000 ml Schaum + Flüssigkeit werden 0,1 ml des Schaumbekämpfungsmittels mit einer Mikropipette zugesetzt und in den in den folgenden Bei spielen angegebenen Zeitabständen die Schaumhöhe erneut gemessen.

Auf diese Weise wurden nachfolgende Substanzen geprüft:

A) 2-Octyldodecanol + 8 EO-n-butyl-ether

B) 2-Octyldodecanol + 10 EO-n-butyl-ether

C) 2-Hexyldecanol-6 EO-n-butyl-ether

D) 2-Hexyldecanol-8 EO-n-butyl-ether

E) Octanol-2 EO-methylether

F) Decanol-2 EO-methylether

G) Decanol-4 EO-methylether


Im Vergleich zu den erfindungsgemäß zu verwendenden Substanzen wurden nachstehend aufgeführte Schaumbekämpfungsmittel, wie sie bisher verwendet werden, in die Prüfungen einbezogen.

H) Nebenprodukt der Oxoalkohol- ("Oxoöl") bzw. Oleylalkohol-Synthesen + 15 Gew.-% Ethylenoxid

I) Nebenprodukt der Oxoalkohol- ("Oxoöl") bzw. Oleylalkohol-Snythesen + 7 Gew.-% EO + 27 Gew.-% PO

K) Ölsäure - 1 PO

L) Ölsäure - 3 PO

M) Nebenprodukt der Oxoalkohol-Synthese ("Oxoöl") + 16 Gew.-% EO + 41 Gew.-% PO
N) Nebenprodukt der Oleylalkohol-Synthese + 15 Gew.-% EO + 40 Gew.-% PO
O) Polyglycerin + 7 EO + 22 PO, verestert mit Ölsäure

| Schaummeßwerte (ml) für die verschiedenen Entschäumer | | | | | | | |
|---|---|---|---|---|---|---|---|
| Substanz | Blindwert | Zeit in Minuten nach Entschäumerzugabe | | | | | |
| | | 0,5 | 1 | 2 | 3 | 5 | 10 |
| A | 2000 | 480 | 480 | 480 | 480 | 480 | 480 |
| B | 2000 | 460 | 460 | 460 | 460 | 460 | 480 |
| C | 2000 | 460 | 460 | 460 | 460 | 460 | 460 |
| D | 2000 | 460 | 460 | 460 | 480 | 480 | 480 |
| E | 2000 | 460 | 460 | 460 | 460 | 460 | 560 |
| F | 2000 | 440 | 460 | 460 | 460 | 460 | 460 |
| G | 2000 | 500 | 500 | 500 | 500 | 520 | 520 |
| H | 2000 | 1240 | 1000 | 740 | 660 | 620 | 620 |
| I | 2000 | 640 | 580 | 560 | 560 | 560 | 560 |
| K | 2000 | 1540 | 1120 | 820 | 660 | 620 | 580 |
| L | 2000 | 1280 | 840 | 680 | 600 | 580 | 580 |
| M | 2000 | 560 | 560 | 540 | 540 | 540 | 540 |
| N | 2000 | 680 | 560 | 560 | 560 | 560 | 560 |
| O | 2000 | 900 | 520 | 520 | 520 | 500 | 500 |

## Ansprüche

1. Verwendung von Endgruppen-verschlossenen Alkohol-Oligoglycol-Ethern der allgemeinen Formel (1)
R-(OCH$_2$CH$_2$)$_n$-OR$_1$  (1),
in der

R  einen gesättigten oder ungesättigten linearen oder verzweigten Alkylrest mit 6 bis 28 C-Atomen,
R$_1$  einen linearen Alkylrest mit 1 bis 8 C-Atomen und
n  eine Zahl von 2 bis 10
bedeuten, als schaumdämpfende Zusatzstoffe bei der Herstellung und/oder Verarbeitung von Nahrungsmitteln sowie in Fermentationsprozessen.

2. Ausführungsform nach Anspruch 1, dadurch gekennzeichnet, daß Verbindungen der allgemeinen Formel (1) verwendet werden, in denen R einen Alkylrest der angegebenen Art mit 8 bis 20 C-Atomen und R$_1$ bevorzugt einen linearen Alkylrest mit 1 bis 4 C-Atomen bedeuten, während n insbesondere eine Zahl von 2 bis 10 ist.

3. Ausführungsform nach Ansprüchen 1 und 2, dadurch gekennzeichnet, daß mit Verbindungen der allgemeinen Formel (I) gearbeitet wird, in denen entweder
R  einen Rest der angegebenen Art mit wenigstens 16 C-Atomen, insbesondere mit 18 bis 24 C-Atomen und dabei n eine Zahl von 6 bis 12, bevorzugt von 8 bis 10 bedeuten,
wobei in diesem Fall die bevorzugte Bedeutung für R$_1$ der n-Butylrest ist, oder
R  einen Rest der angegebenen Art mit 6 bis 14 C-Atomen, bevorzugt mit 8 bis 13 C-Atomen und dabei n eine Zahl von 2 bis 6, bevorzugt von 2 bis 4 bedeuten, wobei in diesem Fall die bevorzugte Bedeutung für R$_1$ der Methylrest ist.

4. Ausführungsform nach Ansprüchen 1 bis 3, dadurch gekennzeichnet, daß die Verbindungen der allgemeinen Formel (1) in der Anwendung in Spurenmengen z.B. im Bereich von 50 bis 500 ppm eingesetzt werden.